Europäisches Patentamt

European Patent Office

Office européen des brevets

(19)

(11) **EP 0 866 995 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.[7]: **G05B 19/414**

(21) Anmeldenummer: **96942276.5**

(22) Anmeldetag: **29.11.1996**

(86) Internationale Anmeldenummer:
**PCT/EP96/05289**

(87) Internationale Veröffentlichungsnummer:
**WO 97/21155 (12.06.1997 Gazette 1997/25)**

(54) **VERFAHREN ZUR STEUERUNG EINER MEHRACHSIGEN WERKZEUGMASCHINE**

METHOD OF CONTROLLING A MULTI-AXIS MACHINE TOOL

PROCEDE DE COMMANDE D'UNE MACHINE-OUTIL A PLUSIEURS AXES

(84) Benannte Vertragsstaaten:
**CH DE FR GB IT LI**

(30) Priorität: **04.12.1995 DE 19545083**

(43) Veröffentlichungstag der Anmeldung:
**30.09.1998 Patentblatt 1998/40**

(73) Patentinhaber: **Dr. Johannes Heidenhain GmbH 83301 Traunreut (DE)**

(72) Erfinder:
• **BRAKELMANN, Michael**
  **D-30900 Wedemark (DE)**
• **KAMIETH, Ralf**
  **D-30938 Burgwedel (DE)**

(56) Entgegenhaltungen:
**EP-A- 0 063 045          EP-A- 0 105 158**

• **PATENT ABSTRACTS OF JAPAN vol. 10, no. 106 (P-449), 22.April 1986 & JP 60 238903 A (MASAHIKO KANA), 27.November 1985,**

EP 0 866 995 B1

**Beschreibung**

Die Erfindung betrifft ein Verfahren zur Steuerung einer mehrachsigen Werkzeugmaschine nach dem Oberbegriff des Anspruches 1 und eine mehrachsige Werkzeugmaschine nach dem Oberbegriff des Anspruches 4 zur Durchführung des Verfahrens nach Anspruch 1.

Bei der Steuerung von Werkzeugmaschinen ist es notwendig, einzelne Achsen in Abhängigkeit von externen Ereignissen, beispielsweise Temperatur, oder von anderen Achsen zu steuern. Bekannte Werkzeugmaschinensteuerungen werden vom Hersteller der Werkzeugmaschine bzw. vom Steuerungshersteller mit den entsprechenden Funktionen ausgestattet. D.h. der Hersteller von Steuerungen entwickelt die Steuerung auf den Anwendungsfall bezogen bzw. bei vorhandenen Steuerungen sind Änderungen vom Hersteller vorzunehmen, wenn sich der Anwendungsfall ändert.

Dies hat zur Folge, daß der Kunde bereits bei einem Auftrag für eine Steuerung den Anwendungsfall möglichst genau zu beschreiben hat bzw. bei Änderungen auf den Hersteller der Steuerung zurückgreifen muß.

Es ist deshalb die Aufgabe der Erfindung, ein Verfahren und eine Anordnung zur Steuerung einer Werkzeugmaschine anzugeben, bei dem der Anwender eine Anpassung an den aktuell vorliegenden Anwendungsfall innerhalb bestimmter Grenzen selbst vornehmen kann.

Diese Aufgabe wird ausgehend von einem Verfahren nach dem Oberbegriff des Anspruches 1 durch die kennzeichnenden Merkmale des Anspruches 1 gelöst.

Vorteilhafte Ausgestaltungen der Erfindung sind in den abhängigen Ansprüchen angegeben.

Gemäß der Erfindung wird für jede Achse einer Werkzeugmaschine eine Koppelfunktion vorgesehen, die vom Bediener programmiert werden kann.

Die Ausführung der Koppelfunktion ist dabei solange gesperrt, bis alle an der Kopplung beteiligten Achsen referenziert wurden, d.h. bis zumindest die Positionen der beteiligten Achsen oder ihre relative Lage zueinander bestimmt ist.

Das erfindungsgemäße Verfahren hat den Vorteil, daß der Endanwender einer Werkzeugmaschine die Steuerung noch beeinflussen kann. Dadurch können Änderungen in den Anforderungen schnell und flexibel vor Ort durchgeführt werden. Schutz vor Schaden bei der Bearbeitung von Werkstücken durch die Werkzeugmaschine wird dadurch erreicht, daß alle an einer Koppelfunktion beteiligten Achsen hinsichtlich ihrer Position definiert sein müssen, bevor die Koppelfunktion ausgeführt werden kann.

Gemäß einer vorteilhaften Ausgestaltung der Erfindung ist die Koppelfunktion jeder Achse aus einer vorgebbaren Anzahl von Basisoperationen aufgebaut. Es hat sich als ausreichend erwiesen, die Anzahl der Basisoperationen auf 10 festzulegen, wobei sich die Anzahl je nach vorgesehener Anwendung auch erhöhen oder erniedrigen kann.

Jede Basisoperation weist mindestens einen Quelloperanden und einen Zieloperanden auf und beinhaltet einen Operator. Auf diese Weise können funktionale Zusammenhänge zwischen verschiedenen Achsen oder Abhängigkeiten von vorgegeben externen Variablen oder Konstantwerten, beispielsweise Master-Slave-Beziehungen oder Temperaturabhängigkeiten, auf einfache Weise vom Anwender programmiert werden. Funktionen höherer Ordnung können durch zwei oder mehrere einzelne Basisoperationen realisiert werden.

Eine weitere vorteilhafte Ausgestaltung der Erfindung sieht vor, daß jede Basisfunktion über zwei Parameter definiert wird. Der erste Parameter enthält die Quelloperanden, einen Zieloperanden und den Operator. Der zweite Parameter enthält einen direkten Eingabewert für einen Quelloperanden. Falls kein direkter Eingabewert für die Basisoperation vorhanden ist, ist der zweite Parameter auf Null gesetzt.

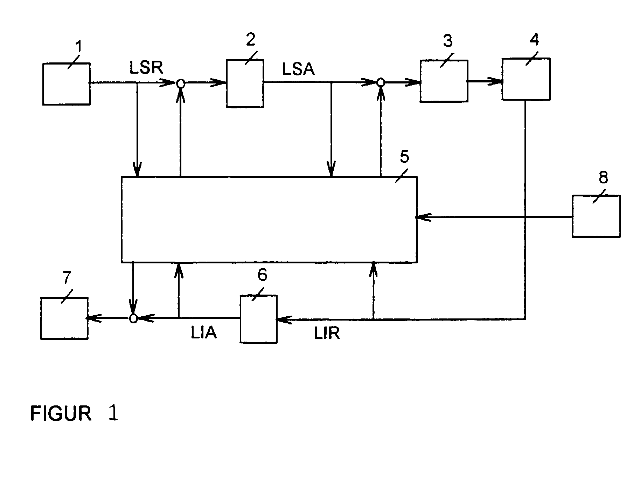

Im folgenden wird die Erfindung an Hand der Figur erläutert.

Die Figur zeigt ein Blockdiagramm, das angibt, wie die Koppelfunktion in die Steuerung der Werkzeugmaschine eingebaut ist.

Der Funktionsblock 5, der die Koppelfunktionen angibt, stellt eine funktionale Beziehung der Lageistwerte zu den Lagesollwerten dar. Die Koppelfunktionen werden über eine Bedieneinheit 8 eingegeben.

In der Einheit 1, die ein Teil der Werkzeugmaschinensteuerung ist, werden relative Sollwerte LSR zur Steuerung einer Achse erzeugt. Diese relativen Sollwerte werden in der Einheit 2 in absolute Sollwerte LSA überführt und an eine Lageregler 3 ausgegeben, der einen Antrieb 4 ansteuert. Aus den Bewegungen des Antriebs werden relative Lageistwerte LIR gewonnen, die in einer Einheit 6 in absolute Lageistwerte LIA überführt werden.

In einer Anzeigeeinheit 7 werden maschinen- und programmbezogene Daten dargestellt.

Durch die Koppelfunktion 5 werden für den speziellen Anwendungsfall vom Anwender eingegebene Beziehungen zwischen aufeinanderfolgenden Lagesollwerten, Lageistwerten und Lagesollwerten oder Abhängigkeiten von Lagesollwerten von direkten oder variablen Werten realisiert.

Im folgenden wird die Anwendungsmöglichkeit der Koppelfunktionen an Hand von einfachen Beispielen erläutert.

Ein häufig vorkommender Anwendungsfall ist die Temperaturkompensation.

Bei der Temperaturkompensation werden absolute Lagesollwerte, d.h. Lagewerte, die auf den absoluten Maschinennullpunkt bezogen sind, verwendet.

Bei der linearen Temperaturkompensation gilt folgende Gleichung:

$$L_{soll} = T_{koeff} * L_{esoll}$$

$L_{esoll}$ ist dabei der von der Einheit 2 ausgegebene absolute Lagesollwert, $T_{koeff}$ gibt den Temperaturkoeffizienten an und $L_{soll}$ bezeichnet den an den Lageregler ausgegebenen Lagesollwert.

Die Basisoperation hat folgendes Aussehen:

| Basisoperation | Parameter 1 | | | | Parameter 2 |
|---|---|---|---|---|---|
| | Zieloperand | Quelloperand 1 | Quelloperand 2 | Operator | Wert |
| 1 | $L_{soll}$ | $L_{esoll}$ | $T_{koeff}$ | Multiplikation | - |

Im vorliegenden Fall besteht die Koppelfunktion aus einer einzigen Basisoperation, welche über einen Parameter definiert wird.

Dieser erste Parameter enthält den Zieloperanden, zwei Quelloperanden und einen Operator. Der zweite Parameter ist unbesetzt, da die Basisoperation keinen direkten Eingabewert, also keinen konstanten Koeffizienten enthält. Der Temperaturkoeffizient wird aus einem Variablenregister ausgelesen, dessen Adresse im Quelloperanden 2 angegeben ist.

Der Parameter 1 besteht in einer bevorzugten Ausführungsform aus einem 32 bit, d.h. 4 Byte langem Datenwort.

Byte 0 gibt den Zieloperanden, Byte 1 den Quelloperanden 1, Byte 2 den Quelloperanden 2 und Byte 3 den Operator an.

Die Belegung eines Byte erfolgt durch die Angabe eines dezimalen Wertes im Bereich zwischen 0 und 255.

Ein weiteres Anwendungsbeispiel ist die Master-Slave-Kopplung, bei der die logische Achse 1 als Slaveachse der Bewegung der logischen Achse 2 folgt.

Bei dieser Kopplung werden die relativen Positionswerte, d.h. die im letzten Arbeitszyklus zurückgelegten Wege der beteiligten Achsen in Beziehung gesetzt. Die Koppelfunktion weist wie im Fall der Temperaturkompensation eine einzige Basisfunktion auf, die wie folgt aufgebaut ist:

| Basisoperation | Parameter 1 | | | | Parameter 2 |
|---|---|---|---|---|---|
| | Zieloperand | Quelloperand 1 | Quelloperand 2 | Operator | Wert |
| 1 | $L_{sr1}$ | $L_{sr2}$ | "direkt" | Multiplikation | const. |

Mit $L_{sr1}$ ist der relative Lagesollwert der Achse 1, mit $L_{sr2}$ ist der relative Lagesollwert der Achse 2, und mit "direkt" ist ein direkter Koppelfaktor zwischen den Achsen bezeichnet.

Da es sich bei dem Koppelfaktor um einen direkten Eingabewert handelt, ist auch der Parameter 2 besetzt, der den Wert des Koppelfaktors enthält.

Ein Beispiel für eine Koppelfunktion mit zwei Basisoperationen ist im folgenden an Hand einer Temperaturkompensation mit einem Temperatur-Offsetwert beschrieben.

Diese Temperaturkompensation basiert auf der Beziehung

$$L_{soll} = T_{koeff} * L_{esoll} + T_{const}$$

Die Koppelfunktion hat folgendes Aussehen:

| Basisoperation | Parameter 1 | | | | Parameter 2 |
|---|---|---|---|---|---|
| | Zieloperand | Quelloperand 1 | Quelloperand 2 | Operator | Wert |
| 1 | Var1 | $L_{esoll}$ | $T_{koeff}$ | Multiplikation | - |
| 2 | $L_{soll}$ | Var1 | "direkt" | Addition | const. |

In der ersten Basisoperation wird als Zieloperand eine Variable Var1 berechnet, die sich aus der Multiplikation des Temperaturkoeffizienten $T_{koeff}$ und dem von der Steuerung vorgegebenen Lagesollwert ergibt. In der zweiten Basisoperation wird der an die Lageregelung ausgegebene Lagesollwert berechnet, der sich durch Addition der Variablen Var1 mit einem direkten Eingabewert, der den Temperaturoffset angibt, ergibt.

**Patentansprüche**

1.  Verfahren zur Steuerung einer mehrachsigen Werkzeugmaschine, insbesondere zur Lageregelung der einzelnen Achsen in Abhängigkeit von mindestens einer anderen Achse oder von externen Parametern,
    **dadurch gekennzeichnet, daß**
    für jede Achse eine Koppelfunktion vorgesehen wird, die vom Bediener der Werkzeugmaschine programmiert werden kann, wobei die Koppelfunktion erst aktiviert werden kann, wenn alle an der Kopplung beteiligten Achsen referenziert wurden.

2.  Verfahren nach Anspruch 1,
    **dadurch gekennzeichnet, daß**
    die Koppelfunktion einer Achse aus einer vorgegebenen Anzahl von Basisoperationen aufgebaut ist, wobei jede Basisoperation mindestens einen Quelloperanden, einen Zieloperanden und einen Operator enthält.

3.  Verfahren nach Anspruch 1 oder Anspruch 2,
    **dadurch gekennzeichnet, daß**
    jede Basisoperation über zwei Parameter definiert wird, wobei der erste Parameter die Quelloperanden, einen Zieloperanden und den Operator enthält und der zweite Parameter einen direkten Eingabewert für einen Quelloperanden enthält oder auf Null gesetzt ist, wenn kein direkter Eingabewert vorhanden ist.

4.  Mehrachsige Werkzeugmaschine, welche für jede Achse

    eine Einheit (1) zur Erzeugung relativer Sollwerte (LSR) zur Steuerung der jeweiligen Achse,
    eine Einheit (2) zur Umwandlung der relativen Sollwerte (LSR) in absolute Sollwerte (LSA), welche an einen Lageregler (3) ausgegeben werden,
    einen Antrieb (4), der vom Lageregler (3) angesteuert wird,
    einen Detektor zur Erzeugung relativer Lageistwerte (LIR) aus den Bewegungen des Antriebs (4) und
    eine Einheit (6) zur Überführung der relativen Lageistwerte LIR in absolute Lageistwerte (LIA) aufweist, dadurch gekennzeichnet,
    daß ein programmierbarer Funktionsblock (5), der mindestens eine Koppelfunktion angibt und eine funktionale Beziehung zwischen Lageistwerten und Lagesollwerten darstellt, vorgesehen ist und daß eine Vorrichtung, durch die eine Koppelfunktion erst aktiviert werden kann, wenn alle an der Kopplung beteiligten Achsen referenziert wurden, vorgesehen ist.

5.  Mehrachsige Werkzeugmaschine nach Anspruch 4,
    **dadurch gekennzeichnet,**
    daß eine Bedieneinheit (8) mit dem Funktionsblock (5) verbunden ist.

6.  Mehrachsige Werkzeugmaschine nach Anspruch 4 oder 5,
    **dadurch gekennzeichnet,**
    daß eine Anzeigeeinheit (7) mit dem Funktionsblock (5) verbunden ist.

**Claims**

1.  Method for controlling a multi-axis machine tool, especially for controlling the position of the individual axes depending upon at least one other axis or upon external parameters,
    **characterised in that**
    a coupling function is provided for each axis which function can be programmed by the operator of the machine tool, the coupling function being able to be activated only when all of the axes relevant to the coupling have been referenced.

2.  Method according to claim 1,
    **characterised in that**
    the coupling function of one axis is built up from a preset quantity of basic operations, each basic operation containing at least one source operand, one target operand and an operator.

3.  Method according to claim 1 or claim 2,

**characterised in that**
each basic operation is defined via two parameters, the first parameter containing the source operands, a target operand and the operator and the second parameter containing a direct input value for a source operand or being set at zero if no direct input value is available.

4. Multi-axis machine tool which has for each axis

 a unit (1) for producing relative reference values (LSR) for controlling the respective axis,
 a unit (2) for converting the relative reference values (LSR) into absolute reference values (LSA) which are emitted to a positioning control (3),
 a drive (4) which is controlled by the positioning control (3),
 a detector for producing relative positional instantaneous values (LIR) from the movements of the drive (4) and
 a unit (6) for transferring the relative positional instantaneous values (LIR) into absolute positional instantaneous values (LIA), characterised in that a programmable functional block (5), which offers at least one coupling function and represents a functional relation between positional instantaneous values and positional reference values, is provided, and
 in that a device is provided, by means of which a coupling function can only be activated when all of the axes relevant to the coupling have been referenced.

5. Multi-axis machine tool according to claim 4,
 **characterised in that**
 an operating unit (8) is connected to the functional block (5).

6. Multi-axis machine tool according to claim 4 or 5,
 **characterised in that**
 a display unit (7) is connected to the functional block (5).


**Revendications**

1. Procédé de commande d'une machine-outil à plusieurs axes, en particulier pour la régulation de position des différents axes en fonction d'au moins un autre axe ou de paramètres externes,
 caractérisé par le fait
 qu'il est prévu pour chaque axe une fonction de couplage qui peut être programmée par l'opérateur de la machine-outil, la fonction de couplage ne pouvant être activée que lorsque tous les axes concernés par le couplage sont référencés.

2. Procédé selon revendication 1, caractérisé par le fait que la fonction de couplage d'un axe est formée d'un nombre prédéterminé d'opérations de base, chaque opération de base comprenant au moins un opérande source, un opérande cible et un opérateur.

3. Procédé selon revendication 1 ou 2, caractérisé par le fait que chaque opération de base est définie par deux paramètres, le premier paramètre comprenant les opérandes source, un opérande cible et l'opérateur, et le second paramètre comprenant une valeur d'entrée directe pour un opérande ou étant posé égal à zéro, lorsqu'il n'y a pas de valeurs d'entrée directe.

4. Machine-outil à plusieurs axes comportant pour chaque axe,

 une unité (1) pour produire des valeurs de consigne relatives (LSR) pour la commande de l'axe concerné,
 une unité (2) pour convertir les valeurs de consigne relatives (LSR) en valeurs de consigne absolues (LSA), qui sont délivrées à un régulateur de position (3),
 un entraînement (4) qui est commandé par le régulateur de position (3),
 un capteur pour produire des valeurs de position réelle relatives (LIR) à partir des déplacements de l'entraînement (4) et
 une unité (6) pour transformer les valeurs de position réelle relatives (LIR) en valeurs de position réelle absolues (LIA), caractérisée
 par le fait qu'il est prévu un bloc fonction programmable (5) qui fournit au moins une fonction de couplage et représente une relation fonctionnelle entre valeurs de position réelle et valeurs de position de consigne et

par le fait qu'il est prévu un dispositif par lequel une fonction de couplage ne peut être activée que lorsque tous les axes concernés par le couplage ont été référencés.

5. Machine-outil à plusieurs axes selon la revendication 4, caractérisée par le fait qu'une unité de commande (8) est connectée au bloc fonction (5).

6. Machine-outil à plusieurs axes selon la revendication 4 ou 5, caractérisée par le fait qu'une unité d'affichage (7) est connectée au bloc fonction (5).

FIGUR 1